# EUROPEAN PATENT APPLICATION

(11) **EP 1 477 698 A1**
(43) Date of publication of application: **17.11.2004**
(21) Application number: 03010891.4
(22) Date of filing: 15.05.2003
(51) Int. Cl.: F16D 23/06

(54) **Sychronizing device in a motor vehicle gearbox**

(71) Applicant: Ford Global Technologies, LLC, Dearborn, MI 48126 (US)
(72) Inventor: Bengtsson, Lars, 43492 Vallda (SE)
(74) Representative: Hellbom, Lars Olof

(57) **Abstract**

Syncronizing device in a motor vehicle gearbox, comprising a synchronizer hub adapted to be non-rotatably joined to a shaft in the gearbox, an engaging sleeve non-rotatably but axially displaceably mounted on the hub, a clutch disc provided with external teeth (7) and adapted to be non-rotatably joined to a gear wheel rotatably mounted on said shaft and lockable relative to the hub by means of the engaging sleeve. A synchronizing ring with external blocker teeth (9) is mounted between the hub and the clutch disc. The engaging sleeve have internal teeth (4) and the clutch disc have external teeth which are tapered such that, in the engagement position of the engaging sleeve, co-operating teeth on the sleeve and on the disc create a force acting on the sleeve in the direction of engagement. The engaging sleeve has at least one non-tapered tooth (30) and the clutch disc at least one blocker tooth (32) on either side of this non-tapered tooth, which are shaped and adapted to one another such that, during axial displacement of the sleeve in the engaging direction, the blocker teeth will, upon contact of a side surface (31) of the non-tapered engaging sleeve tooth with an adjacent clutch disc tooth, be held out of engagement with the side surfaces of the tapered engaging sleeve teeth.

## Description

The present invention relates to a synchronizing device in a motor vehicle gearbox, comprising a synchronizer hub, an engaging sleeve non-rotatably but axially displaceably mounted on the synchronizer hub by means of interengaging external teeth on the synchronizer hub and internal teeth on the engaging sleeve, a clutch disc provided with external teeth, in an engaging position of the engaging sleeve the internal teeth on the engaging sleeve engage with the external teeth on the clutch disc, and a synchronizing ring mounted between the synchronizer hub and the clutch disc and having external blocker teeth engageable with the internal teeth on the engaging sleeve, the engaging sleeve having internal teeth and the clutch disc having external teeth which are tapered such that, in the engaging position of the engaging sleeve, co-operating teeth on the engaging sleeve and on the clutch disc create a force acting on the engaging sleeve in the direction of engagement.

It is common practice in most gearboxes for cars to provide the engaging sleeves and the clutch discs with teeth which are tapered so that facing V-shaped end portions of the engaging sleeve teeth and the clutch disc teeth are wider than portions of the teeth at a distance from the V-shaped end portion. In this manner the rotational forces on interengaged co-operating sloping surfaces create a resultant force acting in the direction of engagement of the engaging sleeve so as to avoid unintended disengagement of an engaged gear.

Usually the tapered portion of the engaging sleeve teeth only extends over a certain length of the tooth so that a V-shaped recess is created in each side surface of the engaging sleeve tooth. When shifting gears by mean of axially displacing the engaging sleeve the internal teeth on the engaging sleeve will initially engage the blocker teeth on the synchronizing ring to initiate the synchronizing process. Eventually during this process the blocker teeth will, due to the drag torque (frictional loss) which the synchronizing ring is affected by, be forced into said recesses in the side surfaces of the internal teeth on the engaging sleeve.

In order to force the blocker teeth on the synchronizing ring out of the recesses in the teeth of the engaging sleeve in order to complete shifting this sleeve has to be loaded with an axial force the size of which depends, firstly, on the angle of the recess wall at the far end of the recess, seen in the direction of displacement of the engaging sleeve, secondly, the depth of the recess and, thirdly, the frictional torque (due to losses) of the synchronizer mechanism. The result of the combination of these parameters may be that a rather large axial force has to be applied on the engaging sleeve which requires that the driver has to apply a corresponding large force on the gear lever to fully engage the engaging sleeve.

The driver may take this resistance to force the blocker teeth out of the recesses as an indication that shifting is completed. However, it is not. The engaging sleeve is merely blocked by the synchronizing ring, what is sometimes called "false engagement". When the driver engages the friction clutch between the engine and the gearbox interaction between the teeth on the clutch disc and the teeth on the engaging sleeve will cause disengagement of the engaging sleeve from the clutch disc, thereby disengaging the selected gear.

The purpose of the present invention is to achieve a synchronizing device of the type described by way of introduction, by means of which the above described "false engagement" will be avoided.

This is achieved according to the invention by virtue of the fact that co-operating means on the engaging sleeve and on the synchronizing ring are arranged such that, during axial displacement of the engaging sleeve in the engaging direction, the blocker teeth on the synchronizing ring will be held out of engagement with adjacent side surfaces of the tapered teeth on the engaging sleeve.

By providing means, which during shifting will locate the synchronizing ring in the rotational direction in relation to the engaging sleeve so that the blocker teeth will held outside of said recesses in the side surfaces of the teeth on the engaging sleeve, the above described false indication of engagement completed is eliminated.

In a preferred embodiment of the invention said co-operating means on the engaging sleeve and the synchronizing ring comprise at least one internal tooth on the engaging sleeve and at least one adjacent blocker tooth on either side of said internal tooth, which are shaped and adapted to one another such that, during axial displacement of the engaging sleeve in the engaging direction, the blocker teeth will, upon contact of a side surface of said internal tooth with an adjacent external tooth on the clutch disc, be held out of engagement with the side surface of the tapered engaging sleeve teeth.

By using means already present, namely an internal tooth on the engaging sleeve and adjacent blocker teeth on the synchronizing ring, as the means to locate the synchronizing ring in relation to the engaging sleeve in the described manner a simple low cost arrangement is obtained.

In one simple embodiment of the invention said at least one internal tooth is non-tapered with parallel opposite sides, the width of which is approximately equal to the minimum width of the recessed cross-section of the tapered teeth. The blocker teeth on either side are then extended in the rotational direction towards said internal tooth a distance approximately equal to the maximum depth of the recesses. In this manner the blocker teeth will be spaced from the tapered teeth on the engaging sleeve no more than will be required to hold the adjacent blocker tooth surface out of contact with any surface portion of the recess.

The invention will be described in more detail below with reference to the accompanying drawing, wherein
Fig. 1 shows a longitudinal section of a prior art synchronizing device,
Fig. 2a a schematic plan view of a portion of the prior art synchronizing device shown in Fig. 1 and
Fig 2b a schematic plan view corresponding with Fig. 2a of a portion of an embodiment of a synchronizing device according to the invention.

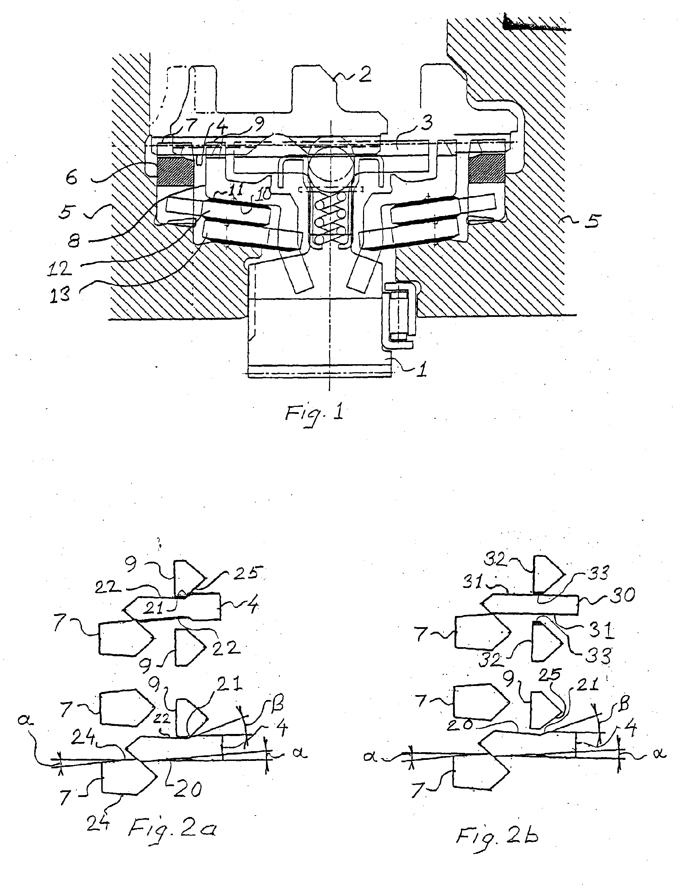

The synchronizing device shown in Fig. 1 comprises a synchronizer hub 1 which is intended to be non-rotatably joined to a shaft (not shown) in a gearbox housing. An engaging sleeve 2 is non-rotatably but axially displaceably mounted on the synchronizer hub 1 by means of interengaging external teeth 3 on the hub and internal teeth 4 on the engaging sleeve 2. On either side of the hub 1 a gear wheel 5 is rotatably mounted on said shaft. Since the synchronizer devices associated with the gear wheels 5 are mirror images of one another only the one to the left will be described.

A clutch disc 6 provided with external teeth 7 along the whole circumference is non-rotatably joined to the gear wheel 5. An outer synchronizing ring 8 is non-rotatably but axially displaceably mounted on the synchronizer hub 1. The ring 8 has external blocker teeth 9 and an internal conical friction surface 10 facing an external conical friction surface 11 on an intermediate ring element 12 which is non-rotatably joined to the clutch disc 6. An inner synchronizing ring 13 is non-rotatably joined to the outer synchronizing ring inside the intermediate ring element 12. Thus the synchronizing ring 8, the intermediate ring element 12 and the inner synchronizing ring 13 are part of a multi (twin) ring system. In single ring systems, instead of having a separate ring element 12 with an external friction surface 11 joined to the clutch disc, usually a corresponding friction surface is machined in one piece with the clutch disc. The internal teeth 4 on the engaging sleeve 2 are tapered over a portion of their axial length. Between a first surface 20, forming an angle "α" with the axis of rotation, and a second surface 21, forming an angle "β" with the axis of rotation, a recess is 22 is formed in opposite side surfaces of each teeth 4. The external teeth 7 on the clutch disc 6 are tapered over their entire axial length so that opposite side surfaces 24 of the teeth 7 form an angle "α" with the axis of rotation.

When a gear is fully engaged the entire surface 24 will be in contact with an adjacent surface 20 on the respective internal tooth 4 on the engaging sleeve.

However, when the synchronizing process is completed but before the gear is fully engaged the teeth 4, 9 and 7, respectively, of the engaging sleeve 2, the outer synchronizing ring 8 and the clutch disc 6 will be positioned relative to one another as shown in Fig. 2a. As can be seen every second blocker tooth 9 on the outer synchronizing ring 8, due to drag torque, will then be forced into a recesses 22 in each engaging sleeve tooth 4. In this position a surface 25 of a V-shaped front portion of each blocker tooth 9 will contact a surface 21 on each internal engaging ring tooth 4. An increased axial force now has to be applied on the engaging sleeve 2 in order to overcome the resistance and force the blocker teeth 9 out of the recesses 22 so as to complete the engagement between the engaging sleeve teeth 4 and clutch disc teeth 7. Apart from the drag torque the axial force increase required depends on the depth of the recess and the angle "β" of the recess surface 21. The driver may take this resistance to force the blocker teeth 9 out of the recesses 22 as an indication that the shifting is completed, when the engaging sleeve is only blocket by the synchronizing ring, a so called "false engagement".

Fig. 2b shows the elements of Fig. 2a but with an engaging sleeve 2 and a outer synchronizing ring 8 modified according to the present invention to avoid "false engagement". Here the engaging sleeve 2 has one internal tooth 30 having no recesses corresponding with the above descibed recesses 22. Instead the tooth 30 has smooth opposite side surfaces 31 which are parallel with one another and with the axis of rotation. In the preferred embodiment shown the width of the of the tooth 30 is approximately equal to the minimum width of the teeth 4. Blocker teeth 32 on either side of the tooth 30 are extended towards the tooth 30. These extensions 33 (shaded areas in Fig. 2b) have a dimension in the rotational direction which is approximately equal to the depth of the recesses 22

When the synchronizing process is initiated during shifting the V-shaped front end portion of the engaging sleeve tooth 30 will hit the opposite V-shaped end portion of one blocker tooth 32 at the same time as the V-shaped front end portions of the engaging sleeve teeth 4 hit the opposite V-shaped end portions of the blocker teeth 9.

Due to the above described shape and size of the tooth 30 and the blocker teeth 32 the engaging sleeve 2 will, by the time the synchronizing process is completed and a side surface 31 of the tooth 30 contacts an adjacent clutch disc tooth 7, be held in such a position relative to the synchronizing ring 8 that the blocker teeth 9 will be positioned completly outside outside the recesses 22, as shown in Fig. 2b.

No increase of the shifting force will then be needed to complete the shifting process by axially displacing the engaging sleeve 2 from the position drawn with full lines in Fig. 1 and Fig. 2b to the position draw with a dash-dotted line in Fig. 1 since, due to the dimensions chosen for the elementes 30, 32 of the preferred embodiment described above, the surfaces 21 of the recesses 22 of the engaging sleeve 2 will be held completely out of the way of the blocker teeth 9.

The preferred embodiment described above solves in a simple and non-expensive manner the problem with "false engagement". If needed more than one engaging sleeve tooth 30 and associated pair of blocker teeth 32 could be arranged. As an alternative within the scope of the invention other co-operating means, such as cam elements associated with the engaging sleeve 2 and the outer synchronizing ring 8, respectively, could be used in place of the described single tooth 30 and pair of blocker teeth 32 to hold the surfaces 21 out of the way of the blocker teeth 9 while at the same time allowing all of the inclined surface of each clutch disc tooth 7 to contact the recess surface 21 when shifting is completed.

## Claims

1. Synchronizing device in a motor vehicle gearbox, comprising a synchronizer hub (1), an engaging sleeve (2) non-rotatably but axially displaceably mounted on the synchronizer hub by means of interengaging external teeth (3) on the synchronizer hub and internal teeth (4) on the engaging sleeve (2), a clutch disc (6) provided with external teeth (7), in an engaging position of the engaging sleeve the internal teeth (4) on the engaging sleeve (2) engage with the external teeth (3) on the clutch disc (6), and a synchronizing ring (8) mounted between the synchronizer hub (1) and the clutch disc (6) and having external blocker teeth (9) engageable with the internal teeth (4) on the engaging sleeve, the engaging sleeve having internal teeth (4) and the clutch disc having external teeth (7) which are tapered such that, in the engaging position of the engaging sleeve, co-operating teeth on the engaging sleeve and on the clutch disc create a force acting on the engaging sleeve in the direction of engagement, **characterized in that** co-operating means (30,32) on the engaging sleeve (2) and on the synchronizing ring (8) are arranged such that, during axial displacement of the engaging sleeve in the engaging direction, the blocker teeth (9) will be held out of engagement with adjacent side surfaces (20) of the internal tapered teeth (4) on the engaging sleeve.

2. Synchronizing device according to claim 1, **characterized in that** said co-operating means on the engaging sleeve (2) and on the synchronizing ring (8) comprise at least one internal tooth (30) on the engaging sleeve and at least one adjacent blocker tooth (32) on either side of said internal tooth, which are shaped and adapted to one another such that, during axial displacement of the engaging sleeve in the engaging direction, the blocker teeth (9) will, upon contact of a side surface of said internal tooth with an adjacent external tooth (7) on the clutch disc (6) be held out of engagement with the side surfaces (20) of the tapered engaging sleeve teeth

3. Synchronizing device according to claim 2, **characterized in that** said at least one internal tooth (30) on the engaging sleeve (2) is non-tapered with opposite side surfaces (31), which are parallel with the axis of rotation of the engaging sleeve.

4. Synchronizing device according to claim 3, **characterized in that** the width of said at least one internal tooth (30) on the engaging sleeve (2) is approximately equal to the minimum width of the tapered teeth (4) and that adjacent blocker teeth (32) on either side of said internal tooth are extended in the rotational direction towards said internal tooth a distance (33) approximately equal to the difference between the maximum and the minimum width of the tapered teeth.
